# EUROPÄISCHE PATENTANMELDUNG

(11) **EP 4 660 256 A1**
(43) Veröffentlichungstag der Anmeldung: **10.12.2025**
(21) Anmeldenummer: 24180003.6
(22) Anmeldetag: 04.06.2024
(51) Int. Cl.: C09D 5/00

(54) **WÄSSRIGE BESCHICHTUNGSMASSE SOWIE DEREN VERWENDUNG**

(71) Anmelder: DAW SE, 64372 Ober-Ramstadt (DE)
(72) Erfinder: Großkopf, Jan Martin, 64367 Mühltal (DE); Walter, Christian, 64354 Reinheim (DE); Brenner, Thomas, 34367 Mühltal (DE); Heil, Stefanie, 64319 Pfungstadt (DE)
(74) Vertreter: Michalski Hüttermann & Partner Patentanwälte mbB

(57) **Zusammenfassung**

Die Erfindung betrifft eine wässrige Beschichtungsmasse, enthaltend a) einen Verdicker, b) ein polymeres organisches Bindemittel, c) einen Hilfsstoff, wie Glyceryl-Caprylat, 2-Amino-2-ethyl-1,3-propanediol oder N,N,N',N'-Tetra-(hydroxyalkyl)alkylendiamin, d) mindestens ein Additiv und e) Wasser, wobei die Zusammensetzung einen pH-Wert im Bereich von 3,0 bis 6,5 aufweist oder auf einen pH-Wert im Bereich von 3,0 bis 6,5 eingestellt ist. Ferner betrifft die Erfindung die Verwendung der erfindungsgemäßen wässrigen Beschichtungsmasse für die Herstellung von oder als Innenfarbe, Farblack, Klarlack, Spachtel, Klebemasse, Putz, Fassadenfarbe, Grundierung oder Pigmentpaste oder als Bestandteil hiervon sowie Innenfarben, Fassadenfarben, Farblacke, Klarlacke, Spachtel, Klebemassen, Putze, Grundierungen oder Pigmentpasten, enthaltend oder gebildet aus der erfindungsgemäßen wässrigen Beschichtungsmasse. Außerdem betrifft die Erfindung ein Verfahren zur Bestimmung der sauren Reserve von Pigmenten oder Füllstoffen sowie einen Wasserfarblack.

## Beschreibung

Die vorliegende Erfindung betrifft eine wässrige Beschichtungsmasse sowie deren Verwendung für die Herstellung von oder als Innenfarbe, Farblack, Klarlack, Spachtelmasse, Putz, Fassadenfarbe, Klebemasse, Grundierung oder Pigmentpaste, insbesondere jeweils in konservierungsmittelfreier Form. Ferner betrifft die Erfindung eine Innenfarbe, eine Fassadenfarbe, einen Farblack, einen Klarlack, eine Spachtelmasse, eine Klebemasse, einen Putz, eine Grundierung und eine Pigmentpaste, enthaltend die wässrige Beschichtungsmasse. Außerdem betrifft die Erfindung ein Verfahren zur Bestimmung der sauren Reserve von Pigmenten oder Füllstoffen. Schließlich betrifft die Erfindung einen Wasserfarblack.

Wässrige Beschichtungsmassen wie Innenfarben basieren regelmäßig auf organischen Bindemitteln. Diese Beschichtungsmassen sind daher zwangsläufig anfällig für mikrobiellen Befall. Dies betrifft sowohl den Herstellungsprozess wie auch die anschließende Lagerung im Verkaufsgebinde. Um Schimmelbildung und Zersetzung zu vermeiden, wurden anfänglich noch Konservierungsmittel in nicht geringer Menge frühzeitig im Herstellungsprozess zugesetzt. Aus gesundheitlichen Erwägungen wird schon seit einiger Zeit versucht, den Einsatz von Konservierungsmitteln stark zu reduzieren bzw. vollständig zu vermeiden. Es besteht mitunter das Risiko, dass die verwendeten Biozide allergische Reaktionen auslösen können. Zur Vermeidung von Konservierungsmitteln ist man seit einiger Zeit dazu übergegangen, für wässrige Beschichtungsmassen relativ hohe pH-Werte von z.B. pH 11,5 oder 12,0 zu wählen. Für viele Mikroorganismen ist bei derart hohen pH-Werten ein Wachstum nicht oder nur sehr eingeschränkt möglich. Allerdings kann der Umgang mit Beschichtungsmassen mit einem hohen pH-Wert zu Hautirritationen führen. Zudem gibt es Mikroorganismen, für die hohe pH-Werte unproblematisch sind. Derartig angepasste Mikroorganismen können bei der Herstellung von wässrigen Beschichtungsmassen dazu führen, dass Anlagen bzw. Anlagenbestandteile häufiger einem Reinigungsprozedere unterworfen werden müssen. Der hiermit einhergehende zusätzliche Arbeits- und Zeitaufwand bei der Herstellung von wässrigen Dispersionsfassadenfarben und Dispersionsinnenfarben kann beträchtlich sein.

Der vorliegenden Erfindung hat daher die Aufgabe zugrunde gelegen, wässrige Beschichtungsmassen zugänglich zu machen, die nicht mit den Nachteilen des Stands der Technik behaftet sind und die insbesondere ohne herkömmliche Konservierungsmittel vor mikrobiellem Befall geschützt sind.

Demgemäß wurde eine wässrige Beschichtungsmasse gefunden, enthaltend
a) einen Verdicker oder mehrere Verdicker,
b) ein polymeres organisches Bindemittel,
c) einen Hilfsstoff ausgewählt aus der Gruppe bestehend aus Glyceryl-Caprylat, Glycerylundecylenat, Caprylhydroxamsäure, Zimtsäure, Natriumanisat, Octansäure, Poly(D-glucosamin), Aminoalkoholen, insbesondere Aminoethylpropandiol (2-Amino-2-ethyl-1,3-propanediol) und/oder N,N,N',N'-Tetra-(hydroxyalkyl)alkylendi-amin, insbesondere N,N,N',N'-Tetra-(2-hydroxypropyl)hexamethylendiamin, und beliebigen Mischungen der vorangehend genannten Verbindungen,
d) mindestens ein Additiv, insbesondere ausgewählt aus der Gruppe bestehend aus Entschäumern, Stabilisatoren, Hydrophobierungsmitteln und deren beliebigen Mischungen, und
e) Wasser,
wobei die Zusammensetzung einen pH-Wert, bestimmt mit einer pH-Elektrode gemäß DIN 55659-1:2012-01 bei 23 ± 2 °C, im Bereich von 3,0 bis 6,5, bevorzugt von 4,5 bis 6,0 und besonders bevorzugt von 4,75 bis 5,75 aufweist oder auf einen pH-Wert im Bereich von 3,0 bis 6,5, bevorzugt von 4,5 bis 6,0 und besonders bevorzugt von 4,75 bis 5,75 eingestellt ist.

Für die Ermittlung des pH-Werts können pH-Elektroden mit Glasmembran verwendet werden. Ein geeignetes pH-Meter ist zum Beispiel das Messgerät SevenEasy (Messbereich pH 0,00-14,00) der Firma Mettler Toledo unter Verwendung der Elektrode InLab ExpertPro (Best.-Nr.: 51343101), ebenfalls von der Firma Mettler Toledo. Für die Einstellung des pH-Werts der erfindungsgemäßen Beschichtungsmasse kann auf sogenannte pH-Einstellmittel zurückgegriffen werden. Unter diesen pH-Einstellmitteln wird im vorliegenden Fall bevorzugt auf Zitronensäure und/oder Salzsäure, insbesondere Zitronensäure, zurückgegriffen.

Es hat sich überraschend gezeigt, dass durch Mitverwendung der Hilfsstoffe gemäß Komponente c) die erfindungsgemäßen wässrigen Beschichtungsmassen über einen längeren Zeitraum einem mikrobiellen Befall standhalten können. Dies ist insbesondere mit solchen erfindungsgemäßen Beschichtungsmassen der Fall, die über einen pH-Wert im Bereich von 4,5 bis 6,0 und bevorzugt von 4,75 bis 5,75 verfügen.

Unter diesen Hilfsstoffen c) wird bevorzugt auf Glyceryl-Caprylat, Caprylhydroxamsäure, Zimtsäure, Aminoalkohole oder deren beliebige Mischung zurückgegriffen. Hierbei haben sich Aminoalkohole und insbesondere 2-Amino-2-ethyl-1,3-propandiolund/oder N,N,N',N'-Tetra-(hydroxyalkyl)alkylendiamin, insbesondere N,N,N',N'-Tetra-(2-hydroxypropyl)hexamethylendiamin, als besonders geeignet erwiesen, insbesondere wenn als alleiniger Hilfsstoff eingesetzt. In denjenigen Ausführungsformen, in denen nur ein Hilfsstoff c) zum Einsatz kommt, greift man hierfür besonders bevorzugt auf N,N,N',N'-Tetra-(hydroxyalkyl)al-kylendiamin, insbesondere N,N,N',N'-Tetra-(2-hydroxypropyl)hexamethylendiamin, zurück. Erfindungsgemäße wässrige Beschichtungsmassen enthaltend nur einen einzigen Hilfststoff c), insbesondere N,N,N',N'-Tetra-(hydroxyalkyl)alkylendiamin bzw. N,N,N',N'-Tetra-(2-hydroxypropyl)hexamethylendiamin, sind besonders bevorzugt. Letzteres gilt insbesondere für solche erfindungsgemäßen wässrigen Beschichtungsmassen, die über einen pH-Wert im Bereich von 4,5 bis 6,0 und bevorzugt von 4,75 bis 5,75 verfügen.

Für viele Anwendungen hat sich auch der kombinierte Einsatz der Hilfsstoffe c) überraschend als sehr förderlich zur Lösung der der Erfindung zugrunde liegenden Aufgabe erwiesen. Besonders geeignete Kombinationen an Hilfsstoffen c) umfassen i) Glyceryl-Caprylat und N,N,N',N'-Tetra-(hydroxyalkyl)alkylendiamin, insbesondere N,N,N',N'-Tetra-(2-hydroxypropyl)hexamethylendiamin, ii) Glyceryl-Caprylat und 2-Amino-2-ethyl-1,3-propandiol und iii) Glyceryl-Caprylat, N,N,N',N'-Tetra-(hydroxyalkyl)alkylendiamin, insbesondere N,N,N',N'-Tetra-(2-hydroxypropyl)hexamethylendiamin, und 2-Amino-2-ethyl-1,3-propandiol. Besonders bevorzugt als Hilfsstoffe c) werden Glyceryl-Caprylat und N,N,N',N'-Tetra-(hydroxyalkyl)alkylendiamin, insbesondere N,N,N',N'-Tetra-(2-hydroxypropyl)hexamethylendiamin, in Kombination eingesetzt, gegebenenfalls ergänzt durch 2-Amino-2-ethyl-1,3-propandiol.

Die der Erfindung zugrunde liegende Aufgabe wird besonders bevorzugt auch gelöst durch derartige erfindungsgemäße wässrige Beschichtungsmassen, die mit einem Puffersystem ausgestattet sind (Komponente f)). Diese Puffersysteme sind zweckmäßigerweise derart eingerichtet und ausgelegt, dass sie den pH-Wert der wässrigen Beschichtungsmasse im sauren Bereich halten. Bevorzugt sind die Puffersysteme ausgelegt und eingerichtet, den pH-Wert der wässrigen Beschichtungsmasse über einen Zeitraum von 28 Tagen im Bereich von 3,0 bis 6,5, bevorzugt von 4,5 bis 6,0 und besonders bevorzugt von 4,75 bis 5,75, zu halten. Geeignete Puffersysteme enthalten regelmäßig eine oder mehrere organische und/oder anorganische Säuren und deren korrespondierende Basen bzw. Salze, wobei insbesondere auf organische Säuren zurückgegriffen wird. Diese organischen Säuren verfügen zweckmäßigerweise über eine Wasserlöslichkeit von mindestens 5,0 g/l, bevorzugt mindestens 20,0 g/l und besonders bevorzugt mindestens 50,0 g/l, jeweils bestimmt bei 20 °C. Bei den organischen und anorganischen Säuren des Puffersystems handelt es sich bevorzugt um solche schwachen organischen bzw. anorganischen Säuren, die im wässrigen Medium (bei 20 °C) einen pKs-Wert im Bereich von 8,0 bis 13,0 (gemäß Laborpraxis Bd. 3: Trennungsmethoden, Springer International Publishing, 2016, ISBN 978-3-0348-0970-2, Seite 73) aufweisen.

Puffersysteme, die das der Erfindung zugrunde liegende Problem mit den erfindungsgemä-βen Beschichtungsmassen besonders zufriedenstellend lösen, basieren auf i) Salzen der Phosphorsäure, insbesondere Na₂HPO₄, und Zitronensäure (Phosphat/Citrat-Puffer), ii) Salzen der Polyacrylsäure, insbesondere Natriumsalze der Polyacrylsäure, und Zitronensäure, iii) NaOH und Zitronensäure, iv) Salzen der Phosphonsäure, insbesondere Natriumsalze der Phosphonsäure, und Zitronensäure, v) Salzen der Salzsäure und Zitronensäure, vi) Salzen der Schwefelsäure und Zitronensäure, vii) Salzen der Polyacrylsäure, insbesondere Natriumsalze der Polyacrylsäure, und Salzsäure sowie viii) auf einem 2-(N-Morpholino)ethansulfonsäure-Hydrat-Puffer.

Bevorzugt kommt bei den erfindungsgemäßen wässrigen Beschichtungsmassen ein Puffersystem enthaltend Salze der Polyacrylsäure, insbesondere Natriumsalze der Polyacrylsäure, und Zitronensäure oder ein Puffersystem enthaltend Salze der Phosphonsäure, insbesondere Natriumsalze der Phosphonsäure, und Zitronensäure oder ein Puffersystem enthaltend NaOH und Zitronensäure oder ein Puffersystem enthaltend Salze der Phosphorsäure, insbesondere Na₂HPO₄, und Zitronensäure (Phosphat/Citrat-Puffer) zum Einsatz. Besonders bevorzugt wird auf ein Puffersystem enthaltend Salze der Polyacrylsäure, insbesondere Natriumsalze der Polyacrylsäure, und Zitronensäure zurückgegriffen.

Die erfindungsgemäßen Beschichtungsmassen, insbesondere solche, enthaltend eines der vorangehend genannten Puffersysteme, zeichnen sich insbesondere dadurch aus, dass deren pH-Wert sich über einen Zeitraum von 28 Tagen um nicht mehr als 0,8, bevorzugt um nicht mehr als 0,5 und besonders bevorzugt um nicht mehr als 0,3, ändert.

Die erfindungsgemäßen wässrigen Beschichtungssysteme enthalten in besonders zweckmäßigen Ausgestaltungen ferner mindestens ein Netz- und/oder Dispergiermittel (Komponente h)). Bevorzugte Netz- und/oder Dispergiermittel umfassen Polyetherphosphate, Benzyl-4-phenylphenolpolyglykolether und/oder Polyvinylalkohol, wobei besonders bevorzugt auf Polyetherphosphate zurückgegriffen wird.

Für viele Anwendungen, insbesondere solche, die keine Grundierungen und Klarlacke betreffen, hat es sich als zweckmäßig erwiesen, dass die erfindungsgemäßen Beschichtungsmassen mit mindestens einem Pigment und/oder mindestens einem Füllstoff ausgestattet sind. Insbesondere bei der Verwendung als Fassaden- und Innenfarben verfügen die erfindungsgemäßen Beschichtungsmassen sowohl über mindestens ein Pigment als auch über mindestens einen Füllstoff.

Bei den erfindungsgemäßen wässrigen Beschichtungsmassen kommen bevorzugt solche Pigmente und Füllstoffe zum Einsatz, die eine saure Reserve von mindestens 0,2, bevorzugt mindestens 0,3 und besonders bevorzugt im Bereich von 0,4 bis 1,3, aufweisen. Hierbei wird die saure Reserve bestimmt in Anlehnung an die Methode von YOUNG et al. (J. R. Young, M. J. How, A. P. Walker, W. M. H. Worth, Classification as Corrosive or Irritant to Skin of Preparations Containing Acidic or Alkaline Substances without Testing on Animals, Toxic. In Vitro, Bd. 2, Nr. 1, 1988, S. 19 - 26), wie im Anhang 4 zu TRGS 201 (Fassung 10.04.2018) ("Technische Regeln für Gefahrstoffe" des Ausschusses für Gefahrstoffe des Bundesministeriums für Arbeit und Soziales der Bundesrepublik Deutschland) beschrieben. Die saure Reserve der Pigmente oder Füllstoffe kann dabei zweckmäßiger Weise nach einem Verfahren ermittelt werden, umfassend die Schritte
a) Vorlegen von 10,0 g an Pigment oder Füllstoff in einem Gebinde,
b) Zugabe von 3,0 g an 0,05 molarer Salzsäure,
c) Zugabe von 87,0 g deionisiertem Wasser,
d) Homogenisieren der erhaltenen Mischung, insbesondere mittels eines Magnetrührers,
e) Titrieren der nach Schritt d) erhaltenen Mischung mit einer 0,1 molaren NaOH-Lösung bis zu einem pH-Wert von 7,0,
f) Multiplikation des Titrationsvolumens (in ml) mit dem Faktor 0,4.

Das Homogenisieren in Schritt d) dient dazu, zu einem einheitlichen bzw. stabilen pH-Wert zu gelangen.

Bei den bei den erfindungsgemäßen wässrigen Beschichtungsmassen zum Einsatz kommenden polymeren organischen Bindemitteln handelt es sich regelmäßig um solche auf Dispersionsbasis. Unter den polymeren organischen Bindemitteln auf Dispersionsbasis sind solche bevorzugt, die über eine Mindestfilmbildetemperatur (MFT) im Bereich von -2 bis +5 °C, insbesondere im Bereich von -1 bis +2 °C, jeweils ermittelt gemäß DIN 53787:1974-02, verfügen.

Besonders geeignete polymere organische Bindemittel können ausgewählt sein aus der Gruppe bestehend aus Polysiloxanharzen, insbesondere in Form einer Emulsion, Alkydharzen, Polymeren oder Copolymeren, insbesondere Copolymeren, auf Basis der Monomere Carbonsäurevinylester mit 3 bis 20 C-Atomen, Vinylaromaten, Vinylhalogeniden, Vinylestern, ethylenisch ungesättigten Carbonsäuren, ethylenisch ungesättigten Carbonsäureestern, ethylenisch ungesättigten Carbonsäureamiden und/oder ethylenisch ungesättigten Carbonsäureanhydriden, vorzugsweise in Form von Polymerdispersionen, und Hybridbindemitteln, insbesondere in Form wässriger Organosilikat-Hybriddispersionen. Hybridbindemittel im Sinne der Erfindung stellen Reaktionsprodukte dar gebildet aus mindestens einem organischen Bindemittel ausgewählt aus der Gruppe bestehend aus Vinylacetat/Ethylen-Copolymeren, Copolymeren auf Basis von Vinylaromaten und Acrylaten sowie Copolymeren auf Basis von Reinacrylaten, enthaltend jeweils in die Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt, und Kieselsol und/oder Wasserglas, insbesondere Wasserglas. Ohne an eine Theorie gebunden zu sein, wird davon ausgegangen, dass die hydrolysierbare Silangruppe a) und/oder die Hydroxygruppe b) eine Kondensationsreaktion mit den funktionellen Gruppen des Kieselsols und/oder Wasserglases eingehen.

Besonders bevorzugt werden bei den erfindungsgemäßen wässrigen Beschichtungsmassen als polymere organische Bindemittel Reinacrylate, enthaltend Säuregruppen, oder Vinylester/Ethylen-Copolymere oder deren Mischungen eingesetzt.

Geeignete Vinylester/Ethylen-Copolymere umfassen Vinylacetat/Ethylen-Copolymere, Vinylversatat/Ethylen-Copolymere, Vinylacetat/Ethylen/Vinylversatat-Copolymere und/oder Vinylacetat/Ethylen/Methylmethacrylat-Copolymere. Bevorzugt wird auf Vinylacetat/Ethylen-Copolymere zurückgegriffen, wobei Vinylacetat/Ethylen-Copolymere umfassend oder bestehend aus 75 bis 89 Gew.-% Vinylacetat-Einheiten und 11 bis 25 Gew.-% Ethylen-Einheiten, insbesondere umfassend oder bestehend aus 75 bis 85 Gew.-% Vinylacetat-Einheiten und 15 bis 25 Gew.-% Ethylen-Einheiten, besonders bevorzugt sind.

Die in den erfindungsgemäßen wässrigen Beschichtungsmassen zum Einsatz kommenden Verdicker sind vorzugsweise ausgewählt aus der Gruppe bestehend aus Celluloseether-Verdickern, Celluloseether-basierten Verdickern, insbesondere Hydroxyethylcellulose-Verdickern, Polyamid-Verdickern, Polyester-Verdickern, Polysaccharid-Verdickern, Polyurethan-Verdickern, mineralischen Rheologieadditiven und deren beliebigen Mischungen. Bevorzugt kommt mit den erfindungsgemäßen wässrigen Beschichtungsmassen ein Polyurethan-Verdicker, vorzugsweise ein hydrophob modifizierter Urethanharz-Verdicker (HEUR), oder Hydroxyethylcellulose-Verdicker zum Einsatz. Celluloseether-basierte Verdicker umfassen regelmäßig solche Celluloseether-Verdicker, bei denen der Celluloseether mit funktionellen Gruppen wie Hydroxy- oder Hydroxyalkylgruppen modifiziert worden ist.

Geeignete Füllstoffe sind bevorzugt ausgewählt aus der Gruppe bestehend aus silikatischen Füllstoffen, Flußspat, Sulfaten, Oxiden und deren beliebigen Mischungen. Bevorzugt kommt bei den erfindungsgemäßen wässrigen Beschichtungsmassen mindestens ein silikatischer Füllstoff, insbesondere auf Aluminiumsilikatbasis, zum Einsatz. Unter den silikatischen Füllstoffen sind Kaolin, Vermiculite, Glimmer, Talkum, Feldspat, Perlite und deren beliebigen Mischungen bevorzugt. Besonders bevorzugt wird auf Kaolin oder Glimmer oder auf eine Mischung aus Kaolin und Glimmer zurückgegriffen.

Es hat sich ferner überraschend gezeigt, dass die der Erfindung zugrunde liegende Aufgabe besonders zuverlässig auch durch derartige erfindungsgemäße wässrige Beschichtungsmassen gelöst wird, die im Wesentlichen frei, insbesondere frei, von Alkali- und Erdalkalicarbonaten, insbesondere frei von jeglichen Carbonaten, sind. Dabei sind auch solche erfindungsgemäßen wässrigen Beschichtungsmassen bevorzugt, die alternativ sowie insbesondere zusätzlich, im Wesentlichen frei, insbesondere frei, von Sulfiden sind.

Die erfindungsgemäßen wässrigen Beschichtungsmassen sind bevorzugt im Wesentlichen frei, insbesondere frei, von Isothiazolinon-Konservierungsmitteln, Lebensmittelkonservierungsmitteln wie Sorbinsäure, wasserlöslichen Salzen der Sorbinsäure, Benzoesäure, wasserlöslichen Salzen der Benzoesäure, wasserlöslichen Salzen der para-Hydroxybenzoesäure, Formaldehyd, formaldehydabspaltenden Verbindungen und/oder, insbesondere und, Pyrithion-Verbindungen. Besonders bevorzugt sind die erfindungsgemäßen wässrigen Beschichtungsmassen frei von jeglichen Topfkonservierungsmitteln und insbesondere frei von jeglichen organischen Konservierungsmitteln. Die erfindungsgemäßen Beschichtungsmassen sind im Sinne der Erfindung als frei an organischen Konservierungsmitteln zu betrachten, wenn nach Maßgabe der "Vergabegrundlage für Umweltzeichen" der RAL gGmbH für "Emissionsarme Innenwandfarben DE-UZ 102" (Ausg. Januar 2019, Version 3) keine organischen Konservierungsmittel darin enthalten sind, und die erfindungsgemäßen Beschichtungsmassen sind im Sinne der Erfindung als im Wesentlichen frei an organischen Konservierungsmitteln zu betrachten, wenn nach Maßgabe der "Vergabegrundlage für Umweltzeichen" der RAL gGmbH für "Emissionsarme Innenwandfarben DE-UZ 102" (Ausg. Januar 2019, Version 3) darin, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm sowie in Bezug auf Methylisothiazolinon (MIT) weniger als 1,5 ppm enthalten sind.

In besonders bevorzugten Ausführungsformen ist die erfindungsgemäße wässrige Beschichtungsmasse gekennzeichnet durch
- 0,1 bis 2,0 Gew.-%, bevorzugt 0,3 bis 1,5 Gew.-% und besonders bevorzugt 0,5 bis 1,0 Gew.-%, an Komponente a) (Verdicker),
- 3,0 bis 30,0 Gew.-%, bevorzugt 4,0 bis 25,0 Gew.-% und besonders bevorzugt 5,0 bis 20,0 Gew.-%, an Komponente b) (bezogen auf den Feststoff) (polymeres organisches Bindemittel),
- 0,01 bis 3,0 Gew.-%, bevorzugt 0,04 bis 2,0 Gew.-% und besonders bevorzugt 0,05 bis 1,5 Gew.-%, an Komponente c) (Hilfsstoff),
- 0,05 bis 1,0 Gew.-%, bevorzugt 0,1 bis 0,8 Gew.-% und besonders bevorzugt 0,2 bis 0,5 Gew.-%, an Komponente d) (Additiv),
- 0,0 bis 4,5 Gew.-%, bevorzugt 0,5 bis 2,5 Gew.-% und besonders bevorzugt 0,7 bis 1,5 Gew.-%, an Komponente f) (Puffersystem),
- 0,0 bis 65,0 Gew.-%, bevorzugt 20,0 bis 60,0 Gew.-% und besonders bevorzugt 35,0 bis 55,0 Gew.-%, an Komponente g) (Pigment und/oder Füllstoff),
- 0,0 bis 1,5 Gew.-%, bevorzugt 0,2 bis 1,2 Gew.-% und besonders bevorzugt 0,4 bis 1,0 Gew.-%, an Komponente h) (Netz- und/oder Dispergiermittel),
wobei die die Beschichtungsmasse bildenden Komponenten, einschließlich Wasser, sich stets zu 100,0 Gew.-% addieren.

Die erfindungsgemäße wässrige Beschichtungsmasse stellt insbesondere eine Innenfarbe, eine Fassadenfarbe, einen Farblack, einen Klarlack, eine Spachtelmasse, eine Klebemasse, einen Putz, eine Grundierung oder eine Pigmentpaste dar oder ist ein Bestandteil hiervon.

Demgemäß betrifft die Erfindung ebenfalls die Verwendung der erfindungsgemäßen wässrigen Beschichtungsmasse für die Herstellung von oder als Innenfarbe, Farblack, Klarlack, Spachtelmasse, Klebemasse, Putz, Fassadenfarbe, Grundierung oder Pigmentpaste oder als Bestandteil hiervon.

Die Erfindung zugrunde liegende Aufgabe wird ebenfalls gelöst durch eine Innenfarbe, eine Fassadenfarbe, einen Farblack, Klarlack, eine Spachtelmasse, eine Klebemasse, einen Putz, eine Grundierung oder eine Pigmentpaste, enthaltend oder gebildet aus der erfindungsgemäßen wässrigen Beschichtungsmasse. Die Pigmentpasten kommen regelmäßig in dem Fachmann bekannten Point-of-Sale-Abtönanlagen zum Einsatz.

Die Erfindung betrifft ferner ein Verfahren zur Bestimmung der sauren Reserve von Pigmenten oder Füllstoffen, umfassend die Schritte
a) Vorlegen von 10,0 g an Pigment oder Füllstoff in einem Gebinde,
b) Zugabe von 3,0 g an 0,05 molarer Salzsäure,
c) Zugabe von 87,0 g deionisiertem Wasser,
d) Homogenisieren der erhaltenen Mischung, insbesondere mittels eines Magnetrührers,
e) Titrieren der nach Schritt d) erhaltenen Mischung mit einer 0,1 molaren NaOH-Lösung bis zu einem pH-Wert von 7,0,
f) Multiplikation des Titrationsvolumens (in ml) mit dem Faktor 0,4.

Das Homogenisieren in Schritt d) dient dazu, zu einem einheitlichen bzw. stabilen pH-Wert zu gelangen.

Des Weiteren wird die der Erfindung zugrunde liegende Aufgabe durch einen Wasserfarblack gelöst, enthaltend
A) einen Verdicker oder mehrere Verdicker, insbesondere einen Polyurethan-Verdicker,
B) ein Reinacrylat, enthaltend Säuregruppen, und/oder ein Vinylester/Ethylen-Copolymer, insbesondere Vinylacetat/Ethylen-Copolymer, als polymere organische Bindemittel in einer Menge im Bereich von 17,5 bis 60,0 Gew.-%, bevorzugt von 25,0 bis 55,0 Gew.-% und besonders bevorzugt von 30,5 bis 52,0 Gew.-% (Feststoffanteil), jeweils bezogen auf das Gesamtgewicht des Wasserfarblacks,
C) ein oder mehrere Pigmente, insbesondere Titandioxid,
D) mindestens ein Additiv und
E) Wasser,
wobei die Zusammensetzung einen pH-Wert, bestimmt mit einer pH-Elektrode gemäß DIN 55659-1:2012-01 bei 23 ± 2 °C, im Bereich von 3,0 bis 6,5, bevorzugt von 4,5 bis 6,0 und besonders bevorzugt von 4,75 bis 5,75 aufweist oder auf einen pH-Wert im Bereich von 3,0 bis 6,5, bevorzugt von 4,5 bis 6,0 und besonders bevorzugt von 4,75 bis 5,75 eingestellt ist.

Der erfindungsgemäße Wasserfarblack kann in einer Ausführungsform mit dem für die erfindungsgemäße wässrige Beschichtungsmasse beschriebenen Puffersystem (Komponente f)) ausgestattet sein. Überraschend hat sich jedoch gezeigt, dass mit den erfindungsgemäßen Wasserfarblacken auch ohne Verwendung eines Puffersystems eine mikrobiologisch stabile Zusammensetzung erhalten wird. Demgemäß verfügt der erfindungsgemäße Wasserfarblack in einer bevorzugten Ausführungsform über kein Puffersystem.

Solche erfindungsgemäßen Wasserfarblacke sind besonders bevorzugt, die über einen Anteil an 10,0 bis 40,0 Gew.-%, bevorzugt 15,0 bis 35,0 Gew.-% und besonders bevorzugt von 17,5 bis 30,0 Gew.-%, an Pigment gemäß Komponente C), jeweils bezogen auf das Gesamtgewicht des Wasserfarblacks, verfügen.

Mit der erfindungsgemäßen wässrigen Beschichtungsmasse geht die überraschende Erkenntnis einher, dass durch den Einsatz einer begrenzten Auswahl an Hilfsstoffen, insbesondere wenn in Kombination mit einem speziellen Puffersystem vorliegend, deren Resistenz gegen mikrobiellen Befall merklich verbessert werden kann, und zwar ohne auf herkömmliche organische Konservierungsmittel angewiesen zu sein. Auch kann mit den erfindungsgemäßen wässrigen Beschichtungsmassen die Gefahr von Hautirritationen wie auch das Risiko allergischer Reaktionen vermindert oder gar unterbunden werden. Von besonderem Vorteil ist hierbei auch, dass die der Erfindung zugrunde liegende Aufgabe gelöst werden kann, ohne Einbußen beim Deckvermögen und applikationstechnischen Eigenschaften in Kauf nehmen zu müssen. Selbst bei Infektion mit Pilzsuspensionen gelangte man zu erfindungsgemäßen wässrigen Beschichtungsmassen, bei denen das Keimwachstum unterbunden werden konnte. Das gleiche traf zu bei Infektion mit Bakteriensuspensionen. Die erfindungsgemäßen wässrigen Beschichtungsmassen verfügen somit auch ohne Konservierungsmittel über ein hohes Maß an Schimmel- und Bakterienresistenz.

### Beispiele:

Nachfolgend sind in der Tabelle 1 Ausführungsbeispiele für erfindungsgemäße wässrige Beschichtungsmassen ("Bsp. 1", "Bsp. 2", "Bsp. 3" und "Bsp. 4) gezeigt. Das Referenzbeispiel 1 ("Vgl.bsp. 1") zeigt eine nicht erfindungsgemäße wässrige Beschichtungsmasse. Das Gewicht der Komponenten in den Ausführungsbeispielen bezieht sich (abgesehen von Wasser) jeweils auf den Feststoffanteil der eingesetzten Komponente.

**Tabelle 1:**

| | Bestandteil | Bsp. 1 (Gew.-%) | Bsp.2 (Gew.-%) | Bsp. 3 (Gew.-%) | Bsp. 4 (Gew.-%) | Vgl.bsp. 1 (Gew.-%) |
|---|---|---|---|---|---|---|
| a) | Celluloseether-Verdicker | 0,6 | 0,6 | 0,6 | 0,6 | 0,6 |
| b) | Vinylacetat/ Ethylen-Copolymer | 8,5 | 8,5 | 8,5 | 8,5 | 8,5 |
| c) | 2-Amino-2-ethyl-1,3-propandiol | - | 0,084 | - | - | - |
| c) | N,N,N',N'-Tetra-(2-hydroxypropyl)hexamethylendiamin | 0,56 | - | - | 0,32 | - |
| c) | Glyceryl-Caprylat | - | - | 1,0 | 0,5 | - |
| d) | Entschäumer | 0,3 | 0,3 | 0,3 | 0,3 | 0,3 |
| e) | Wasser | 42,83 | 44,041 | 44,25 | 44,43 | 45,25 |
| f) | Natriumsalz der Polyacrylsäure und Zitronensäure | 1,86 (0,96 + 0,9) | 1,125 (0,525 + 0,6) | - | - | - |
| g) | Titandioxid und Glimmer | 45 (15 + 30) | 45 (15 + 30) | 45 (15 + 30) | 45 (15 + 30) | 45 (15 + 30) |
| h) | Polyetherphosphat | 0,35 | 0,35 | 0,35 | 0,35 | 0,35 |
| | pH-Wert | 5,09 | 4,99 | 5,05 | 5,2 | 6,97 |

Die Beschichtungsmassen gemäß den Beispielen 1, 2, 3 und 4 zeigten auch bei wiederholter Beimpfung mit einer Mischung aus Bakterien und Pilzen keinen Befall mit Bakterien und Pilzen. Hierbei wurden die Proben einem sogenannten Konservierungsbelastungstest unterzogen. Mit dieser Untersuchung kann festgestellt werden, ob ein System hinreichend gegen den Befall mit Mikroorganismen während der Produktion und Lagerzeit geschützt ist. Es kamen zwei verschiedene Bakterienmischungen zum Einsatz. Zum einen wurden kommerziell erhältliche Bakterienstämme, wie Escherichia coli, Enterobacter aerogenes, Pseudomonas aeroginosa und Pseudomonas stutzeri benutzt, zum anderen kamen Bakterienisolate aus dem Farbbetrieb der Anmelderin und von mit Bakterien wie Aerococcus urinaeequi, Aerococcus viridans, Bacillus simplex, div. Microbacterium-Stämmen, Pseudomonas aeroginosa und Staphylococcen befallenen Farbproben der Anmelderin zum Einsatz. Für die Pilzsuspension wurden Acremonium strictum, Aspergillus niger, Aspergillus oryzae, Penicillium brevicompactum, Penicillium funiculosum und Penicillium ochrochloron verwendet. Aus den genannten Bakterien wurden Impfsuspensionen mit einer Zielkonzentration von 1 bis 2 x 10⁹ KBE/ml hergestellt. Für die Pilzimpfsuspension wurde eine Konzentration von 1 bis 5 x 107 Sporen/ml erstellt. Auf je 50 g der zu untersuchenden Farbprobe wurden unterschieden nach Bakterien und Pilzen 1 x pro Woche 0,5 mL Impfsuspension gegeben und mit einem schmalen, sterilen Holzspatel im zu prüfenden Medium verrührt. Der Kontrollausstrich der Proben erfolgte nach 2 und 7 Tagen, für Bakterien auf CASO-Agar, für Pilze auf Sabouraud 4 % Glukose-Extrakt Agar. Die Bebrütung der Proben erfolgt bei 30 °C ± 2 °C für Bakterien und 25 °C ± 2 °C für Pilze. Dieses Prozedere wurde über 7 Wochen wiederholt. Nach der letzten Beimpfung wurden die Proben für weitere 21 Tage gelagert und nach einem finalen Ausstrich bewertet. Die Beobachtung der Keimzahlen des belasteten Systems im Vergleich zu den Kontrollsystemen lässt die Aussage zu, ob und wie sicher die zugesetzten Mikroorganismen abgetötet bzw. vom System kontrolliert wurden. Ein stabiles System sollte die Infektion beim 7 Tages-Ausstrich vollständig eliminiert haben. Dies war bei den erfindungsgemä-ßen Beispielen (Bsp. 1 bis Bsp. 4) der Fall, während die Probe gemäß dem Vergleichsbeispiel 1 innerhalb kurzer Zeit vollständig mit Pilzsporen und Bakterienkulturen bedeckt war und somit keine ausreichende Lagerstabilität aufwies.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Beschichtungsmasse, enthaltend
a) einen Verdicker oder mehrere Verdicker,
b) ein polymeres organisches Bindemittel,
c) einen Hilfsstoff ausgewählt aus der Gruppe bestehend aus Glyceryl-Caprylat, Glycerylundecylenat, Caprylhydroxamsäure, Zimtsäure, Natriumanisat, Octansäure, Poly(D-glucosamin), Aminoalkoholen, insbesondere Aminoethylpropanediol (2-Amino-2-ethyl-1,3-propanediol) und/oder N,N,N',N'-Tetra-(hydroxyalkyl)alkylendiamin, insbesondere N,N,N',N'-Tetra-(2-hydroxypropyl)hexamethylendiamin, und beliebigen Mischungen der vorangehend genannten Verbindungen,
d) mindestens ein Additiv, insbesondere ausgewählt aus der Gruppe bestehend aus Entschäumern, Stabilisatoren, Hydrophobierungsmitteln und deren beliebigen Mischungen, und
e) Wasser,
wobei die Zusammensetzung einen pH-Wert, bestimmt mit einer pH-Elektrode gemäß DIN 55659-1:2012-01 bei 23 ± 2 °C, im Bereich von 3,0 bis 6,5, bevorzugt von 4,5 bis 6,0 und besonders bevorzugt von 4,75 bis 5,75 aufweist oder auf einen pH-Wert im Bereich von 3,0 bis 6,5, bevorzugt von 4,5 bis 6,0 und besonders bevorzugt von 4,75 bis 5,75 eingestellt ist.

2. Wässrige Beschichtungsmasse nach Anspruch 1, **dadurch gekennzeichnet, dass** der Hilfsstoff c) Glyceryl-Caprylat, Caprylhydroxamsäure, Zimtsäure, und/oder Aminoalkohole, bevorzugt 2-Amino-2-ethyl-1,3-propandiol und/ oder N,N,N',N'-Tetra-(hydroxyalkyl)alkylendiamin, besonders bevorzugt N,N,N',N'-Tetra-(2-hydroxypropyl)hexamethylendiamin, oder dass der Hilfsstoff c) Glyceryl-Caprylat und N,N,N',N'-Tetra-(hydroxyalkyl)alkylendiamin, insbesondere N,N,N',N'-Tetra-(2-hydroxypropyl)hexamethylendiamin, oder dass der Hilfsstoff c) Glyceryl-Caprylat und 2-Amino-2-ethyl-1,3-propandiol, oder dass der Hilfsstoff c) Glyceryl-Caprylat, N,N,N',N'-Tetra-(hydroxyalkyl)alkylendiamin, insbesondere N,N,N',N'-Tetra-(2-hydroxypropyl)hexamethylendiamin, und 2-Amino-2-ethyl-1,3-propandiol umfasst oder darstellt.

3. Wässrige Beschichtungsmasse nach Anspruch 1 oder 2, ferner umfassend
f) ein Puffersystem, enthaltend eine oder mehrere organische und/oder anorganische Säuren, insbesondere organische Säuren, und deren korrespondierende Basen bzw. Salze,
g) mindestens ein Pigment und/oder mindestens einen Füllstoff und/oder, insbesondere und,
h) mindestens ein Netz- und/oder Dispergiermittel, bevorzugt Polyetherphosphate, Benzyl-4-phenylphenolpolyglykolether und/oder Polyvinylalkohol, besonders bevorzugt Polyetherphosphate.

4. Wässrige Beschichtungsmasse nach Anspruch 3, **dadurch gekennzeichnet, dass** die organische Säure des Puffersystems eine Wasserlöslichkeit von mindestens 5,0 g/l, bevorzugt mindestens 20,0 g/l und besonders bevorzugt mindestens 50,0 g/l, jeweils bestimmt bei 20 °C, aufweist und/oder, insbesondere und, dass die organische oder anorganische Säure eine schwache organische bzw. anorganische Säure darstellt, insbesondere im wässrigen Medium (bei 20 °C) einen pKs-Wert im Bereich von 8,0 bis 13,0 (gemäß Laborpraxis Bd. 3: Trennungsmethoden, Springer International Publishing, 2016, ISBN 978-3-0348-0970-2, Seite 73) aufweist.

5. Wässrige Beschichtungsmasse nach Anspruch 3 oder 4, **dadurch gekennzeichnet, dass**
das Puffersystem ein Puffersystem enthaltend Salze der Phosphorsäure, insbesondere Na₂HPO₄, und Zitronensäure (Phosphat/Citrat-Puffer),
ein Puffersystem enthaltend Salze der Polyacrylsäure, insbesondere Natriumsalze der Polyacrylsäure, und Zitronensäure,
ein Puffersystem enthaltend NaOH und Zitronensäure,
ein Puffersystem enthaltend Salze der Phosphonsäure, insbesondere Natriumsalze der Phosphonsäure, und Zitronensäure,
ein Puffersystem enthaltend Salze der Salzsäure und Zitronensäure,
ein Puffersystem enthaltend Salze der Schwefelsäure und Zitronensäure,
ein Puffersystem enthaltend Salze der Polyacrylsäure, insbesondere Natriumsalze der Polyacrylsäure, und Salzsäure oder
einen 2-(N-Morpholino)ethansulfonsäure-Hydrat-Puffer darstellt oder umfasst.

6. Wässrige Beschichtungsmasse nach Anspruch 5 **dadurch gekennzeichnet, dass** das Puffersystem ein Puffersystem enthaltend Salze der Polyacrylsäure, insbesondere Natriumsalze der Polyacrylsäure, und Zitronensäure oder ein Puffersystem enthaltend Salze der Phosphonsäure, insbesondere Natriumsalze der Phosphonsäure, und Zitronensäure oder ein Puffersystem enthaltend NaOH und Zitronensäure oder ein Puffersystem enthaltend Salze der Phosphorsäure, insbesondere Na₂HPO₄, und Zitronensäure (Phosphat/Citrat-Puffer), insbesondere ein Puffersystem enthaltend Salze der Polyacrylsäure, insbesondere Natriumsalze der Polyacrylsäure, und Zitronensäure, darstellt oder umfasst.

7. Wässrige Beschichtungsmasse nach einem der vorangehenden Ansprüche, **dadurch gekennzeichnet, dass**
das polymere organische Bindemittel ein Reinacrylat, enthaltend Säuregruppen, und/oder ein Vinylester/Ethylen-Copolymer, insbesondere Vinylacetat/EthylenCopolymer, umfasst oder darstellt, insbesondere enthaltend 75 bis 89 Gew.-% Vinylacetat-Einheiten und 11 bis 25 Gew.-% Ethylen-Einheiten, insbesondere enthaltend 75 bis 85 Gew.-% Vinylacetat-Einheiten und 15 bis 25 Gew.-% Ethylen-Einheiten.

8. Wässrige Beschichtungsmasse nach einem der vorangehenden Ansprüche, **dadurch gekennzeichnet, dass**
der Verdicker ausgewählt ist aus der Gruppe, bestehend aus Celluloseether-Verdickern, Celluloseether-basierten Verdickern, insbesondere Hydroxyethylcellulose-Verdickern, Polyamid-Verdickern, Polyester-Verdickern, Polysaccharid-Verdickern, Polyurethan-Verdickern und mineralischen Rheologieadditiven, und insbesondere einen Polyurethan-Verdicker, vorzugsweise einen hydrophob modifizierten Urethanharz-Verdicker (HEUR), umfasst oder darstellt.

9. Wässrige Beschichtungsmasse nach einem der Ansprüche 3 bis 8, **dadurch gekennzeichnet, dass**
der Füllstoff oder die Mischung an Füllstoffen ausgewählt ist aus der Gruppe, bestehend aus silikatischen Füllstoffen, Flußspat, Sulfaten und Oxiden und deren beliebigen Mischungen, und bevorzugt mindestens einen silikatischen Füllstoff, insbesondere auf Aluminiumsilikatbasis, umfasst oder darstellt und besonders bevorzugt Kaolin, Vermiculite, Glimmer, Talkum, Feldspat und/oder Perlite sowie ganz besonders bevorzugt Kaolin und/oder Glimmer umfasst.

10. Wässrige Beschichtungsmasse nach einem der vorangehenden Ansprüche, **dadurch gekennzeichnet, dass**
diese im Wesentlichen frei, bevorzugt frei, von Alkali- und Erdalkalicarbonaten, besonders bevorzugt frei von jeglichen Carbonaten, und/oder, insbesondere und, im Wesentlichen frei, insbesondere frei, von Sulfiden ist.

11. Wässrige Beschichtungsmasse nach einem der vorangehenden Ansprüche, **dadurch gekennzeichnet, dass**
diese im Wesentlichen frei, insbesondere frei, von Lebensmittelkonservierungsmitteln wie Sorbinsäure, wasserlöslichen Salzen der Sorbinsäure, Benzoesäure, wasserlöslichen Salzen der Benzoesäure, wasserlöslichen Salzen der para-Hydroxybenzoesäure; Konservierungsmitteln auf Basis von Isothiazolinon; Formaldehyd; formaldehydabspaltenden Verbindungen und/oder, insbesondere und, Pyrithion-Verbindungen, ist, besonders bevorzugt frei von jeglichen Topfkonservierungsmitteln, ganz besonders bevorzugt frei von jeglichen organischen Konservierungsmitteln.

12. Wässrige Beschichtungsmasse nach einem der Ansprüche 3 bis 11, **dadurch gekennzeichnet, dass**
die Pigmente und/oder die Füllstoffe eine saure Reserve von mindestens 0,2, bevorzugt mindestens 0,3 und besonders bevorzugt im Bereich von 0,4 bis 1,3, aufweisen, jeweils bestimmt in Anlehnung an die Methode von YOUNG et al. (J. R. Young, M. J. How, A. P. Walker, W. M. H. Worth, Classification as Corrosive or Irritant to Skin of Preparations Containing Acidic or Alkaline Substances without Testing on Animals, Toxic. In Vitro, Bd. 2, Nr. 1, 1988, S. 19 - 26), wie im Anhang 4 zu TRGS 201 (Fassung 10.04.2018) ("Technische Regeln für Gefahrstoffe" des Ausschusses für Gefahrstoffe des Bundesministeriums für Arbeit und Soziales der Bundesrepublik Deutschland) beschrieben.

13. Wässrige Beschichtungsmasse nach Anspruch 12, **dadurch gekennzeichnet, dass** die saure Reserve der Pigmente oder Füllstoffe bestimmt wird nach einem Verfahren, umfassend die Schritte
a) Vorlegen von 10,0 g an Pigment oder Füllstoff in einem Gebinde,
b) Zugabe von 3,0 g an 0,05 molarer Salzsäure,
c) Zugabe von 87,0 g deionisiertem Wasser,
d) Homogenisieren der erhaltenen Mischung, insbesondere mittels eines Magnetrührers,
e) Titrieren der nach Schritt d) erhaltenen Mischung mit einer 0,1 molaren NaOH-Lösung bis zu einem pH-Wert von 7,0,
f) Multiplikation des Titrationsvolumens (in ml) mit dem Faktor 0,4.

14. Wässrige Beschichtungsmasse nach einem der vorangehenden Ansprüche, **dadurch gekennzeichnet, dass**
diese eine Innenfarbe, eine Fassadenfarbe, einen Farblack, einen Klarlack, einen Spachtel, eine Klebemasse, einen Putz, eine Grundierung oder eine Pigmentpaste darstellt oder Bestandteil hiervon ist.

15. Wässrige Beschichtungsmasse nach einem der vorangehenden Ansprüche,
**gekennzeichnet durch**
- 0,1 bis 2,0 Gew.-%, bevorzugt 0,3 bis 1,5 Gew.-% und besonders bevorzugt 0,5 bis 1,0 Gew.-%, an Komponente a) (Verdicker),
- 3,0 bis 30,0 Gew.-%, bevorzugt 4,0 bis 25,0 Gew.-% und besonders bevorzugt 5,0 bis 20,0 Gew.-%, an Komponente b) (bezogen auf den Feststoff) (polymeres organisches Bindemittel),
- 0,01 bis 3,0 Gew.-%, bevorzugt 0,04 bis 2,0 Gew.-% und besonders bevorzugt 0,05 bis 1,5 Gew.-%, an Komponente c) (Hilfsstoff),
- 0,05 bis 1,0 Gew.-%, bevorzugt 0,1 bis 0,8 Gew.-% und besonders bevorzugt 0,2 bis 0,5 Gew.-%, an Komponente d) (Additiv),
- 0,0 bis 4,5 Gew.-%, bevorzugt 0,5 bis 2,5 Gew.-% und besonders bevorzugt 0,7 bis 1,5 Gew.-%, an Komponente f) (Puffersystem),
- 0,0 bis 65,0 Gew.-%, bevorzugt 20,0 bis 60,0 Gew.-% und besonders bevorzugt 35,0 bis 55,0 Gew.-%, an Komponente g) (Pigment und/oder Füllstoff),
- 0,0 bis 1,5 Gew.-%, bevorzugt 0,2 bis 1,2 Gew.-% und besonders bevorzugt 0,4 bis 1,0 Gew.-%, an Komponente h) (Netz- und/oder Dispergiermittel),
wobei die die Beschichtungsmasse bildenden Komponenten sich stets zu 100,0 Gew.-% addieren.

16. Verwendung der wässrigen Beschichtungsmasse nach einem der vorangehenden Ansprüche für die Herstellung von oder als Innenfarbe, Farblack, Klarlack, Spachtel, Klebemasse, Putz, Fassadenfarbe, Grundierung oder Pigmentpaste oder als Bestandteil hiervon.

17. Innenfarbe, Fassadenfarbe, Farblack, Klarlack, Spachtel, Klebemasse, Putz, Grundierung oder Pigmentpaste, enthaltend oder gebildet aus der wässrigen Beschichtungsmasse nach einem der Ansprüche 1 bis 15.

18. Verfahren zur Bestimmung der sauren Reserve von Pigmenten oder Füllstoffen, umfassend die Schritte
a) Vorlegen von 10,0 g an Pigment oder Füllstoff in einem Gebinde,
b) Zugabe von 3,0 g an 0,05 molarer Salzsäure,
c) Zugabe von 87,0 g deionisiertem Wasser,
d) Homogenisieren der erhaltenen Mischung, insbesondere mittels eines Magnetrührers,
e) Titrieren der nach Schritt d) erhaltenen Mischung mit einer 0,1 molaren NaOH-Lösung bis zu einem pH-Wert von 7,0,
f) Multiplikation des Titrationsvolumens (in ml) mit dem Faktor 0,4.

19. Wasserfarblack, insbesondere Puffersystem-freier Wasserfarblack, enthaltend
A) einen Verdicker oder mehrere Verdicker, insbesondere einen Polyurethan-Verdicker,
B) ein Reinacrylat, enthaltend Säuregruppen, und/oder ein Vinylester/EthylenCopolymer, insbesondere ein Vinylacetat/Ethylen-Copolymer, als polymere organische Bindemittel in einer Menge im Bereich von 17,5 bis 60,0 Gew.-%, bevorzugt von 25,0 bis 55,0 Gew.-% und besonders bevorzugt von 30,0 bis 52,0 Gew.-% (Feststoffanteil), jeweils bezogen auf das Gesamtgewicht des Wasserfarblacks,
C) ein oder mehrere Pigmente, insbesondere Titandioxid,
D) mindestens ein Additiv und
E) Wasser,
wobei die Zusammensetzung einen pH-Wert, bestimmt mit einer pH-Elektrode gemäß DIN 55659-1:2012-01 bei 23 ± 2 °C, im Bereich von 3,0 bis 6,5, bevorzugt von 4,5 bis 6,0 und besonders bevorzugt von 4,75 bis 5,75 aufweist oder auf einen pH-Wert im Bereich von 3,0 bis 6,5, bevorzugt von 4,5 bis 6,0 und besonders bevorzugt von 4,75 bis 5,75, eingestellt ist.

20. Wasserfarblack nach Anspruch 19, **gekennzeichnet durch** einen Anteil an 10,0 bis 40,0 Gew.-%, bevorzugt 15,0 bis 35,0 Gew.-% und besonders bevorzugt von 17,5 bis 30,0 Gew.-%, an Pigment gemäß Komponente C), jeweils bezogen auf das Gesamtgewicht des Wasserfarblacks.
